# FASCICULE DE BREVET EUROPEEN

(11) **EP 3 847 629 B1**
(45) Date de publication et mention de la délivrance du brevet: **20.04.2022**
(21) Numéro de dépôt: 19755924.8
(22) Date de dépôt: 22.08.2019
(51) Int. Cl.: G07C 5/00, G07C 5/08

(54) **DISPOSITIF DE MESURE CONNECTÉ POUR UN AÉRONEF**
ANGESCHLOSSENES MESSGERÄT FÜR EIN FLUGZEUG
CONNECTED MEASUREMENT DEVICE FOR AN AIRCRAFT

(30) Priorité: 03.09.2018 FR 1857893
(43) Date de publication de la demande: 14.07.2021
(73) Titulaire: SAFRAN ELECTRONICS & DEFENSE, 92100 Boulogne Billancourt (FR)
(72) Inventeur: FANTON, Nicolas, 92100 BOULOGNE BILLANCOURT (FR); THIRION, Louis Théophile, 92100 BOULOGNE BILLANCOURT (FR); HOFF, Rémy, 92100 BOULOGNE BILLANCOURT (FR); COUTURIER, Emmanuel, 92100 BOULOGNE BILLANCOURT (FR)
(74) Mandataire: Cabinet Le Guen Maillet
(86) Numéro de dépôt international: PCT/EP2019/072513
(87) Numéro de publication internationale: WO 2020/048788

(56) Documents cités:
- WO-A1-2017/108848
- WO-A1-2017/216119
- US-B1- 6 348 911

## Description

### DOMAINE TECHNIQUE

La présente invention concerne le domaine technique des systèmes de surveillance pour un aéronef.

### ETAT DE LA TECHNIQUE ANTERIEURE

La demande de brevet français n° 17 58213 déposée le 6 septembre 2017 divulgue un système de surveillance pour un aéronef, le système de surveillance comprenant des dispositifs de mesure et une borne de réception conformes à une norme réseau étendu à faible consommation (ou LPWAN pour « Low Power Wide Area Network » en anglais) installés dans un aéronef. Ce réseau est par exemple un réseau dit « LoRaWAN » tel que défini par la « Lora Alliance » (voir https://lora-alliance.org/). Chaque dispositif de mesure divulgué comprend :
- un capteur agencé pour mesurer au moins un paramètre de l'aéronef,
- une antenne conforme à la norme réseau étendu à faible consommation et un émetteur conforme à la même norme,
- une source d'alimentation autonome qui alimente le dispositif de mesure,
- un module de coupure principal monté entre la source d'alimentation et l'émetteur,
- un module de gestion agencé pour surveiller des paramètres de fonctionnement de l'émetteur et pour ouvrir et fermer sélectivement le module de coupure en fonction des paramètres de fonctionnement.

Ainsi, chaque dispositif de mesure peut couper physiquement l'alimentation électrique de son émetteur en cas de problème, ce qui garantit que l'émetteur ne peut en aucun cas émettre une énergie radio qui ne soit pas conforme avec une norme aéronautique telle que par exemple la norme RTCA DO-160 Section 21.

Cette demande de brevet divulgue que les dispositifs de mesure comprennent deux modes de fonctionnement : un premier mode de fonctionnement correspondant globalement à une phase où l'aéronef se déplace (phase de roulage, décollage, montée, vol, descente, atterrissage et roulage finale) et un deuxième mode de fonctionnement correspondant à une phase où l'aéronef est immobile (ou phase de « parking »). Les dispositifs de mesure comprennent des moyens (par exemple accéléromètre et/ou gyroscope) pour détecter la phase de vol dans laquelle se trouve l'aéronef dans lequel est installé le dispositif de mesure. Selon ce document, l'émission de signal radio par un dispositif de mesure est désactivée lorsque le dispositif de mesure est dans le premier mode de fonctionnement, c'est-à-dire quand l'aéronef est en vol ou en mouvement. Ainsi, de façon évidente, dans ce premier mode de fonctionnement, chaque dispositif de mesure est en conformité avec les normes d'interférences radio puisque n'étant pas en capacité d'émettre des signaux radios.

Toutefois, le système divulgué par le document cité oblige à attendre une phase d'immobilisation de l'aéronef (c.-à-d. le deuxième mode de fonctionnement des dispositifs de mesure) pour pouvoir collecter des données mesurées par les capteurs des dispositifs de mesure. Ceci est particulièrement problématique si par exemple le dispositif de mesure est censé permettre la surveillance d'un paramètre physique tel que la température d'un container réfrigéré, et alerter si cette température dépasse un certain seuil : le dispositif n'est alors en mesure d'émettre une alerte qu'une fois que l'aéronef est immobilisé sur la piste. Si cela peut permettre de savoir a posteriori qu'un problème de température a eu lieu avec le container pendant le vol, il est toutefois probablement trop tard pour agir et corriger le problème. Par ailleurs, s'il est ainsi souhaitable de pouvoir collecter des données mesurées lors des phases de vol, il faut en même temps s'assurer que la consommation électrique des dispositifs de mesure reste la plus faible possible, la possibilité d'intervention pour changer ou recharger des alimentations des dispositifs de mesure en phase de vol étant inexistante.

La demande de brevet WO 2017/216119 divulgue un système pour surveiller un dispositif d'un aéronef.

La demande de brevet WO 2017/108848 divulgue un procédé de surveillance du vieillissement d'un train d'atterrissage d'un aéronef.

### EXPOSE DE L'INVENTION

L'invention concerne un dispositif de mesure pour un système de surveillance destiné à être installé dans un aéronef, le dispositif de mesure étant adapté pour fonctionner selon un premier mode de fonctionnement dit « au sol » ou un deuxième mode de fonctionnement dit « en vol ». Le dispositif de mesure comprend :
- un capteur adapté pour mesurer au moins un paramètre physique de l'environnement de l'aéronef,
- un module radio conforme à une norme réseau étendu à faible consommation, le module radio étant adapté pour émettre des messages comprenant des données de mesure issues du capteur vers un point d'accès radio, le module radio étant adapté pour émettre chaque message avec une puissance d'émission choisie parmi une pluralité prédéfinie de puissances d'émissions,
- une source d'alimentation électrique,
- un module de gestion de l'alimentation électrique monté en coupure entre le module radio et le module d'alimentation électrique, le module de gestion de l'alimentation comprenant un élément de stockage d'énergie permettant d'alimenter le module radio,
- un module de contrôle, le module de contrôle étant adapté pour basculer le mode de fonctionnement du dispositif de mesure entre le premier mode de fonctionnement dit « au sol » et le deuxième mode de fonctionnement dit « en vol ».

Ledit dispositif de mesure est adapté pour :
- dans le premier mode de fonctionnement dit « au sol » :
   o avant l'émission de chaque message, charger l'élément de stockage d'énergie avec une énergie prédéfinie,
- dans le deuxième mode de fonctionnement dit « en vol » :
   o pour chaque message à émettre, choisir une puissance d'émission du module radio,
   o déterminer, en fonction de cette puissance d'émission, une énergie nécessaire pour l'émission du message par le module radio,
   o avant l'émission du message, charger l'élément de stockage d'énergie avec l'énergie nécessaire déterminée.

Selon un mode de réalisation complémentaire de l'invention, le module radio étant en outre adapté pour émettre un message en fonction d'un facteur d'étalement, le facteur d'étalement étant choisi parmi une pluralité prédéfinie de facteurs d'étalements, le dispositif de mesure est adapté pour, dans le deuxième mode de fonctionnement dit « en vol » :
- pour chaque message à émettre, choisir une puissance d'émission du module radio et un facteur d'étalement,
- déterminer l'énergie nécessaire pour l'émission du message par le module radio en fonction de la puissance d'émission et du facteur d'étalement choisis.

Selon un mode de réalisation complémentaire de l'invention, le dispositif de mesure est adapté pour, dans le deuxième mode de fonctionnement dit « en vol », suite à l'émission d'un message par le module radio avec une première puissance et selon un premier facteur d'étalement, et en l'absence de réponse d'acquittement du point d'accès radio :
- choisir une deuxième puissance d'émission du module radio et un deuxième facteur d'étalement, pour réémettre le message,

la deuxième puissance d'émission et le deuxième facteur d'étalement correspondant à une entrée d'une liste prédéterminée, la liste comprenant la pluralité des couples formés par la pluralité des puissances d'émission et la pluralité des facteurs d'étalement, chaque couple étant associé à une énergie nécessaire pour émettre un message avec la puissance d'émission du couple et selon le facteur d'étalement du couple, la liste étant ordonnée selon l'énergie nécessaire pour émettre le message associé à chaque couple, la deuxième puissance d'émission et le deuxième facteur d'étalement correspondant au couple suivant le couple formé par la première puissance d'émission et le premier facteur d'étalement.

Selon un mode de réalisation complémentaire de l'invention, la liste ne comprend pas les couples formés par une puissance d'émission et un facteur d'étalement nécessitant une énergie pour émettre un message supérieur à un seuil d'énergie prédéterminé.

Selon un mode de réalisation complémentaire de l'invention, une liste est associée à chaque taille de message à émettre.

Selon un mode de réalisation complémentaire de l'invention, le module de gestion de l'alimentation électrique comprend un compteur de Coulomb.

L'invention concerne également un système de surveillance d'un aéronef, le système comprenant :
- une pluralité de dispositifs de mesure selon l'une des revendications précédentes,
- un point d'accès radio, le point d'accès radio étant connecté à un équipement de l'aéronef.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] illustre schématiquement l'architecture matérielle d'un dispositif de mesure selon un mode de réalisation de l'invention,
[Fig. 2] illustre schématiquement un procédé d'émission d'un message par un dispositif de mesure selon un mode de réalisation de l'invention.

### EXPOSE DETAILLE DE MODES DE REALISATION

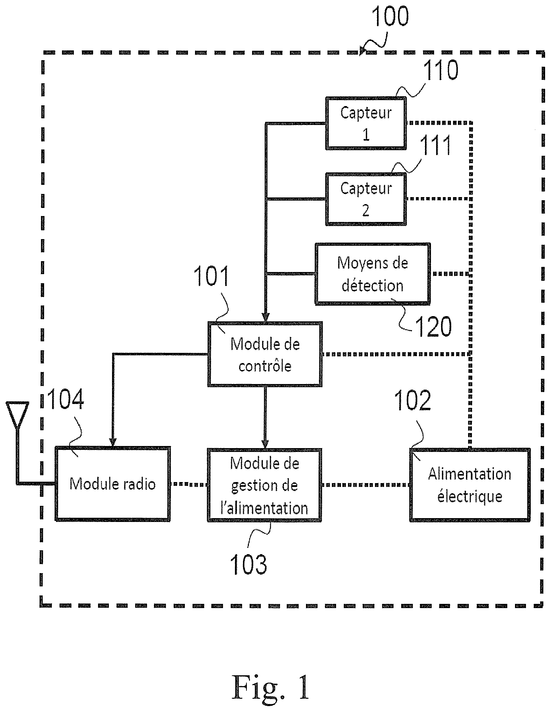

La **Fig. 1** illustre schématiquement l'architecture matérielle d'un dispositif de mesure 100 selon un mode de réalisation de l'invention.

Le dispositif de mesure 100 est destiné à être intégré à un système de surveillance installé dans un aéronef. Le dispositif de mesure 100 est adapté pour fonctionner selon un premier mode de fonctionnement dit « au sol » ou un deuxième mode de fonctionnement dit « en vol ». Le premier mode de fonctionnement correspond à une phase où l'aéronef se déplace (phase de roulage, décollage, montée, vol, descente, atterrissage et roulage finale). Le deuxième mode de fonctionnement correspondant à une phase où l'aéronef est immobile (ou phase de « parking »).

Le dispositif de mesure 100 comprend :
- un ou plusieurs capteurs 110, 111 adaptés pour mesurer des paramètres physiques de l'environnement de l'aéronef,
- un module radio 104 conforme à une norme réseau étendu à faible consommation, le module radio 104 étant adapté pour émettre des messages comprenant des données de mesure issues d'un des capteurs 110, 111 vers un point d'accès radio, le module radio étant adapté pour émettre chaque message avec une puissance d'émission choisie parmi une pluralité prédéfinie de puissances d'émissions,
- une source d'alimentation électrique 102,
- un module de gestion 103 de l'alimentation électrique monté en coupure entre le module radio 104 et le module d'alimentation électrique 102, le module de gestion de l'alimentation 103 comprenant un élément de stockage d'énergie permettant d'alimenter le module radio,
- un module de contrôle 101, le module de contrôle 101 étant adapté pour basculer le mode de fonctionnement du dispositif de mesure entre le premier mode de fonctionnement dit « au sol » et le deuxième mode de fonctionnement dit « en vol ».

Le module de contrôle 101 peut comprendre ou être connecté à des moyens de détection 120, ces moyens de détection étant adaptés pour détecter si l'aéronef est en vol ou immobilisé au sol. Ces moyens de détection 120 comprennent typiquement un gyroscope et/ou un accéléromètre.

Le module de gestion de l'alimentation 103 permet de garantir que le module radio 104 n'est alimenté que par une quantité contrôlée d'énergie électrique. Selon un mode de réalisation de l'invention, le module de gestion de l'alimentation 103 comprend un condensateur électrique. Ce condensateur peut être chargé d'une quantité d'énergie électrique variable, cette quantité d'énergie électrique variable étant déterminée par exemple par le module de contrôle 101. La quantité maximale d'énergie pouvant être stockée par le condensateur, c'est-à-dire la capacité maximale du condensateur, peut être choisie de manière à empêcher le module radio 104 d'émettre plus qu'une certaine énergie radioélectrique afin d'être en conformité avec une norme d'interférence radio.

Selon un mode de réalisation complémentaire de l'invention, le module de gestion de l'alimentation 103 peut comprendre un compteur dit de Coulomb afin de mesurer l'énergie électrique transmise au module radio 104. Ainsi, le module de gestion de l'alimentation peut couper l'alimentation électrique du module radio dès qu'une quantité prédéfinie, ou définie par le module de contrôle 101, d'énergie a été transmise au module radio 104 pour l'émission d'un message.

Ainsi, le dispositif de mesure 100 est adapté pour, dans le premier mode de fonctionnement dit « au sol » :
o avant l'émission de chaque message, charger l'élément de stockage d'énergie avec une énergie prédéfinie.

Le dispositif de mesure 100 peut ainsi émettre un message via le module radio 104, le module de gestion de l'alimentation 103 garantissant que le module radio ne peut pas émettre plus que l'énergie maximale autorisée correspondant à l'énergie stockée dans l'élément de stockage, modulo les pertes d'énergie inhérentes au fonctionnement du module radio 104.

De même, le dispositif de mesure 100 est adapté pour, dans le deuxième mode de fonctionnement dit « en vol » :
o pour chaque message à émettre, choisir une puissance d'émission du module radio,
o déterminer, en fonction de cette puissance d'émission, une énergie nécessaire pour l'émission du message par le module radio,
o avant l'émission du message, charger l'élément de stockage d'énergie avec l'énergie nécessaire déterminée.

Lorsque le dispositif de mesure 100 est dans le deuxième mode de fonctionnement dit « vol », il est souhaitable de commencer par émettre un message avec la puissance d'émission la plus faible possible. Si le message émis n'est pas reçu par le point d'accès, ce qui peut être déduit si le dispositif de mesure 100 ne reçoit pas de message d'acquittement de la part du point d'accès suite à l'émission du message, alors la puissance d'émission du module radio 104 est progressivement augmentée jusqu'au moment où un acquittement est enfin reçu. La puissance d'émission peut alors être conservée pour de prochains messages. Périodiquement, cette séquence d'émission d'un message avec une puissance d'émission croissante peut être répétée afin de garantir que le module radio 104 émet avec une puissance minimale.

Selon un mode de réalisation, le dispositif de mesure 100 est caractérisé en ce que le module radio est aussi adapté pour émettre un message en fonction d'un facteur d'étalement de spectre radio (« spread factor » en anglais). Cette technologie « d'étalement » permet d'étaler un signal radio sur un large spectre de fréquences grâce à l'utilisation d'un code. C'est par exemple le cas pour une technologie radio dite « LoRa » développée par la « LoRa Alliance ». Le facteur d'étalement peut être choisi parmi une pluralité prédéfinie de facteurs d'étalements.

Le dispositif de mesure 100 est alors adapté pour, quand il fonctionne dans le deuxième mode de fonctionnement dit « en vol » :
- pour chaque message à émettre, choisir une puissance d'émission du module radio et un facteur d'étalement,
- déterminer l'énergie nécessaire pour l'émission du message par le module radio en fonction de la puissance d'émission et du facteur d'étalement choisis.

La relation entre la puissance d'émission d'un signal radio émis par le module radio 104, le facteur d'étalement utilisé pour cette émission et l'énergie électrique nécessaire (ici en nA.h) pour cette émission n'est pas triviale comme le montre le tableau ci-dessous :

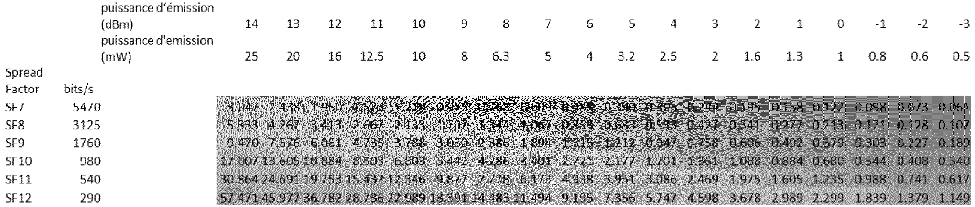

Ce tableau donne, pour un couple donné d'une puissance d'émission et d'un facteur d'étalement, l'énergie nécessaire pour l'émission d'un message d'une taille prédéterminé, la taille d'un message dépendant particulièrement de la charge utile du message (« payload » en anglais). Il est à noter que ce tableau est un exemple pour une taille donnée de message, un autre tableau devant être déterminé pour une taille de message différente.

Ce tableau doit être déterminé dans une phase de configuration préalable pour un module radio 104 et pour chaque taille de message potentiellement émis par le module radio 104.

Ce tableau peut être généré à partir de quelques mesures, les autres données pouvant être alors calculés.

Ce tableau peut être présenté sous une forme différente, mais équivalente, d'une liste comprenant des couples puissance d'émission et facteur d'étalement, chaque couple étant associé à une énergie nécessaire pour une émission d'un message d'une taille prédéfinie.

Cette liste est avantageusement ordonnée, de l'énergie nécessaire la plus faible vers la plus haute.

Par exemple, la liste peut ici commencer par le couple (P = -3dBm ; SF = 7) associé à l'énergie 0.061nA.h. Le dernier élément de la liste est ici le couple (P = 14 dBm ; SF = 12), associé à l'énergie nécessaire 57.471 nA.h (avec « P » pour «puissance d'émission» et « SF » pour « facteur d'étalement » - ou « spread factor » en anglais).

A noter qu'à puissance d'émission égale, l'émission d'un message avec un facteur d'étalement élevé (SF = 12 par exemple) diminue la bande passante disponible (ici 290 bits/s contre 5470 bits/s avec un SF de 7) et nécessite donc d'émettre plus longtemps, ce qui explique la plus grande énergie nécessaire. Par contre, la portée d'émission du message est alors plus grande.

Une fois le tableau - ou la liste ordonnée - réalisé, le dispositif de mesure 100 peut choisir les couples (puissance émission ; facteur d'étalement) dans un ordre croissant d'énergie nécessaire, et tester chaque couple jusqu'à trouver celui permettant de recevoir un acquittement. Ce couple est alors celui qui permet une bonne réception d'un message émis avec une énergie consommée lors de l'émission minimale. La consommation électrique du dispositif de mesure 100 est alors minimale. L'alimentation électrique 102 est alors préservée pour une meilleure longévité.

Ainsi, lorsque dans le deuxième mode de fonctionnement dit « en vol », le dispositif de mesure 100 est adapté pour, suite à l'émission d'un message par le module radio avec une première puissance et selon un premier facteur d'étalement, et en l'absence de réponse d'acquittement du point d'accès radio :
- choisir une deuxième puissance d'émission du module radio et un deuxième facteur d'étalement, pour réémettre le message.

La deuxième puissance d'émission et le deuxième facteur d'étalement correspondent à une entrée de la liste prédéterminée (ou du tableau), la liste comprenant la pluralité des couples formés par la pluralité des puissances d'émission et la pluralité des facteurs d'étalement, chaque couple étant associé à une énergie nécessaire pour émettre un message avec la puissance d'émission du couple et selon le facteur d'étalement du couple, la liste étant ordonnée selon l'énergie nécessaire pour émettre le message associé à chaque couple, la deuxième puissance d'émission et le deuxième facteur d'étalement correspondant au couple suivant le couple formé par la première puissance d'émission et le premier facteur d'étalement.

Une liste est associée à chaque taille de message à émettre. Chaque liste est générée ou prédéterminée lors d'une phase de configuration du dispositif de mesure 100.

Selon un mode de réalisation complémentaire de l'invention, la liste ne comprend pas les couples formés par une puissance d'émission et un facteur d'étalement nécessitant une énergie pour émettre un message supérieur à un seuil d'énergie prédéterminé. Dit autrement, il est possible de s'interdire d'utiliser des couples puissance d'émission et facteur d'étalement qui amèneraient à trop consommer d'énergie électrique et/ou à émettre des signaux radio dépassant une énergie radio prédéterminée.

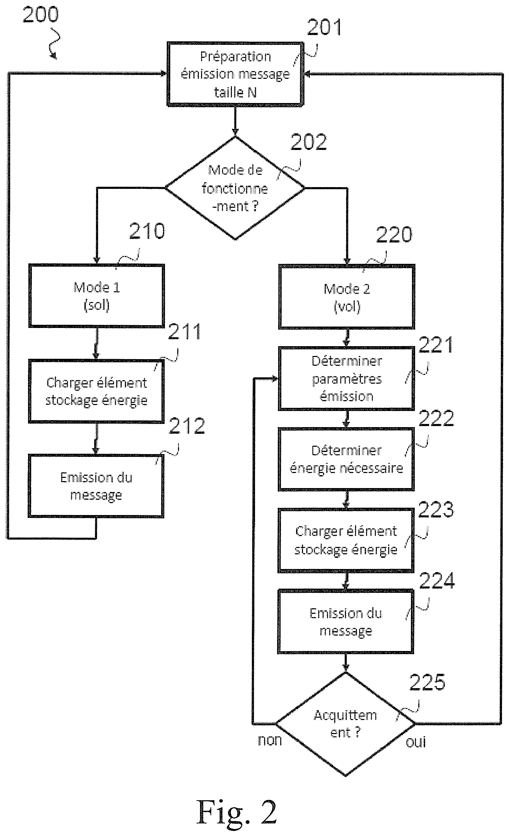

La **Fig. 2** illustre schématiquement un procédé d'émission d'un message par un dispositif de mesure 100 selon un mode de réalisation de l'invention.

Dans une première étape 201, le dispositif de mesure 100 détermine qu'un message est à émettre. Le message peut comprendre des données issues de mesures effectuées par l'un des capteurs 110, 111. Le besoin d'émission d'un message peut être déclenché par le dépassement d'un seuil par l'une des mesures d'un des capteurs 110, 111 ou bien être déclenché périodiquement.

Dans une étape suivante 202, le dispositif de mesure 100 détermine son mode de fonctionnement. Ce mode de fonctionnement est déterminé par le module de contrôle 101, possiblement selon des données issues des moyens de détection 120, lesquels peuvent comprendre un gyroscope et/ou un accéléromètre. Le mode de fonctionnement peut correspondre à un état d'une mémoire dite « drapeau » (« flag » en anglais), cette mémoire étant mise à jour périodiquement ou à la demande selon les données des moyens de détection 120.

Si le dispositif de mesure 100 détermine qu'il est dans le premier mode de fonctionnement, correspondant à un aéronef au sol (immobilisé au sol ou « parking »), le dispositif de mesure 100 passe à une étape 210.

Si le dispositif de mesure 100 détermine qu'il est dans le deuxième mode de fonctionnement, correspondant à un aéronef vol, le dispositif de mesure 100 passe à une étape 220. A noter que selon un mode de réalisation de l'invention, à défaut de pouvoir déterminer un mode de fonctionnement, le dispositif de mesure considère être dans le deuxième mode de fonctionnement.

Dans le premier mode de fonctionnement, suite à l'étape 210, selon un mode de réalisation de l'invention, le dispositif de mesure 100, dans une étape 211, charge l'élément de stockage d'énergie électrique du module de gestion de l'alimentation 103 avec une énergie prédéterminée. Cette énergie prédéterminée correspond à une énergie maximale d'émission que ne doit pas dépasser le module radio 104 lors de ses émissions de messages.

Dans une étape suivante 212, le module radio 104 peut émettre le message, l'énergie mise à disposition par le module de gestion de l'alimentation 103 garantissant que le module radio 104 ne pourra pas dépasser lors de cette émission une énergie maximale par exemple définie par une norme.

Dans le deuxième mode de fonctionnement, suite à l'étape 220, selon un mode de réalisation de l'invention, le dispositif de mesure 100, dans une étape 221, détermine des paramètres d'émission pour le message. Ces paramètres d'émission comprennent par exemple une puissance d'émission et un facteur d'étalement. Ces paramètres peuvent être retrouvés dans un tableau ou une liste ordonnée comprenant par exemple des couples (puissance d'émission ; facteur d'étalement) ordonnés selon l'énergie nécessaire pour l'émission selon les paramètres définis par chaque couple. Typiquement, le dispositif de mesure choisit lors d'une première étape 221 le premier élément de la liste ordonnée correspondant à une énergie nécessaire minimale.

Dans une étape suivante 222, le dispositif de mesure 100 détermine l'énergie nécessaire pour l'émission du message avec les paramètres précédemment déterminés. Cette énergie nécessaire peut être définie en association avec chaque couple de la liste, elle peut donc être facilement retrouvée. Alternativement, le dispositif de mesure 100 peut appliquer des facteurs de corrections pour tenir compte de la perte en énergie lors de l'émission d'un message.

Dans une étape suivante 223, le dispositif de mesure 100 configure le module de gestion de l'alimentation 103 afin que celui-ci ne puisse pas fournir plus d'énergie électrique que l'énergie précédemment déterminée au module radio 104. Selon un mode de réalisation de l'invention, le dispositif de mesure 100 charge un élément de stockage d'énergie électrique avec l'énergie nécessaire précédemment déterminée. Cet élément de stockage est par exemple un condensateur. Selon un mode de réalisation complémentaire, le dispositif de mesure 100 configure un compteur de type Coulomb - compris dans le module de gestion de l'alimentation 103 - afin que l'alimentation du module radio 104 soit coupée dès qu'une valeur seuil d'énergie transmise au module radio 104 est dépassée.

Dans une étape suivante 224, le module radio 104 émet le message. Le module radio 104 ne peut dépasser une valeur maximale d'énergie émise, laquelle est contrôlée en fonction de l'énergie nécessaire configurée par le module de gestion de l'alimentation 103 lors de l'étape 223.

Dans une étape suivante 225, et possiblement après un temps d'attente prédéterminé, le dispositif de mesure 100 vérifie si un acquittement a été reçu indiquant la bonne réception du message émis.

Si le message est bien acquitté (retour à l'étape 201 ou bien à l'étape 220 tant que le dispositif de mesure reste dans le deuxième mode de fonctionnement), alors le procédé prend fin jusqu'à l'émission d'un prochain message. Possiblement alors, le couple puissance d'émission et facteur d'étalement est gardé en mémoire. Lors d'une nouvelle étape 221 réalisée pour un nouveau message à émettre de même taille, le dispositif de mesure peut avantageusement utiliser ces paramètres gardés en mémoire. Cela peut éviter de recommencer une phase de test de plusieurs paramètres qui au final ne permettent pas une bonne réception des messages. A l'inverse, il peut être utile de périodiquement valider que les paramètres choisis sont bien les plus économes en termes d'énergie nécessaire. Ainsi, un temps de validité peut être associé à des paramètres déterminés lors d'une étape 221, et utilisés pour l'émission d'un message, suite à la réception d'un acquittement lors d'une étape 225.

Si le message n'est pas acquitté, alors le dispositif de mesure 100 recommence une étape 221 en choisissant dans le tableau ou la liste ordonnée les paramètres ou couple (puissance émission ; facteur d'étalement) suivants, c'est-à-dire ceux nécessitant une énergie juste supérieure. Le procédé est ainsi répété, avec à chaque fois une énergie nécessaire croissante, jusqu'au moment où un acquittement est reçu. Il est ainsi possible de déterminer les paramètres puissance d'émission et facteur d'étalement garantissant une consommation minimale du module radio 104, et donc du dispositif de mesure 100.

## Revendications

1. Dispositif de mesure (100) pour un système de surveillance destiné à être installé dans un aéronef, le dispositif de mesure étant adapté pour fonctionner selon un premier mode de fonctionnement dit « au sol » ou un deuxième mode de fonctionnement dit « en vol », le dispositif de mesure comprenant :
- un capteur adapté pour mesurer au moins un paramètre physique de l'environnement de l'aéronef,
- un module radio conforme à une norme réseau étendu à faible consommation, le module radio étant adapté pour émettre des messages comprenant des données de mesure issues du capteur vers un point d'accès radio, le module radio étant adapté pour émettre chaque message avec une puissance d'émission choisie parmi une pluralité prédéfinie de puissances d'émissions,
- une source d'alimentation électrique,
- un module de gestion de l'alimentation électrique monté en coupure entre le module radio et le module d'alimentation électrique,
- un module de contrôle, le module de contrôle étant adapté pour basculer le mode de fonctionnement du dispositif de mesure entre le premier mode de fonctionnement dit « au sol » et le deuxième mode de fonctionnement dit « en vol », le dispositif de mesure étant **caractérisé en ce que**
le module de gestion de l'alimentation comprend un élément de stockage d'énergie permettant d'alimenter le module radio; et
le dispositif de mesure est adapté pour :
- dans le premier mode de fonctionnement dit « au sol » :
o avant l'émission de chaque message, charger l'élément de stockage d'énergie avec une énergie prédéfinie fournie par la source d'alimentation électrique,
- dans le deuxième mode de fonctionnement dit « en vol » :
o pour chaque message à émettre, choisir une puissance d'émission du module radio,
o déterminer, en fonction de cette puissance d'émission, une énergie nécessaire pour l'émission du message par le module radio,
o avant l'émission du message, charger l'élément de stockage d'énergie avec l'énergie nécessaire déterminée et fournie par la source d'alimentation électrique.

2. Dispositif de mesure selon la revendication 1, le dispositif de mesure étant **caractérisé en ce que** le module radio comporte en outre des moyens pour émettre un message en fonction d'un facteur d'étalement, le facteur d'étalement étant choisi parmi une pluralité prédéfinie de facteurs d'étalements, le dispositif de mesure étant adapté pour, dans le deuxième mode de fonctionnement dit « en vol » :
- pour chaque message à émettre, choisir une puissance d'émission du module radio et un facteur d'étalement,
- déterminer l'énergie nécessaire pour l'émission du message par le module radio en fonction de la puissance d'émission et du facteur d'étalement choisis.

3. Dispositif de mesure selon la revendication 2, **caractérisé en ce que** le dispositif de mesure comporte en outre des moyens pour , dans le deuxième mode de fonctionnement dit « en vol », suite à l'émission d'un message par le module radio avec une première puissance et selon un premier facteur d'étalement, et en l'absence de réponse d'acquittement du point d'accès radio :
- des moyens pour choisir une deuxième puissance d'émission du module radio et un deuxième facteur d'étalement, pour réémettre le message,
la deuxième puissance d'émission et le deuxième facteur d'étalement correspondant à une entrée d'une liste prédéterminée, la liste comprenant la pluralité des couples formés par la pluralité des puissances d'émission et la pluralité des facteurs d'étalement, chaque couple étant associé à une énergie nécessaire pour émettre un message avec la puissance d'émission du couple et selon le facteur d'étalement du couple, la liste étant ordonnée selon l'énergie nécessaire pour émettre le message associé à chaque couple, la deuxième puissance d'émission et le deuxième facteur d'étalement correspondant au couple suivant le couple formé par la première puissance d'émission et le premier facteur d'étalement.

4. Dispositif de mesure selon la revendication 3, **caractérisé en ce que** la liste ne comprend pas de couples formés par une puissance d'émission et un facteur d'étalement nécessitant une énergie pour émettre un message supérieur à un seuil d'énergie prédéterminé.

5. Dispositif de mesure selon la revendication 3 ou 4, **caractérisé en ce que** le dispositif de mesure comporte une liste associée à chaque taille de message à émettre.

6. Dispositif de mesure selon l'une des revendications précédentes, **caractérisé en ce que** le module de gestion de l'alimentation électrique comprend un compteur de Coulomb.

7. Système de surveillance d'un aéronef, le système comprenant :
- une pluralité de dispositifs de mesure selon l'une des revendications précédentes,
- un point d'accès radio, le point d'accès radio étant connecté à un équipement de l'aéronef.

## Patentansprüche

1. Messgerät (100) für ein Überwachungssystem, das dazu bestimmt ist, in ein Flugzeug installiert zu werden, wobei das Messgerät dazu geeignet ist, in einem "am Boden" genannten ersten Betriebsmodus oder in einem "im Flug" genannten zweiten Betriebsmodus zu funktionieren, wobei das Messgerät umfasst:
- einen Sensor, der dazu geeignet ist, mindestens einen physikalischen Umweltparameter des Flugzeugs zu messen,
- ein Funkmodul, das einer Norm eines Weitverkehrsnetzes mit niedrigem Verbrauch entspricht, wobei das Funkmodul dazu geeignet ist, Nachrichten, die Messdaten aus dem Sensor umfassen, zu einem Funkzugangspunkt zu senden, wobei das Funkmodul dazu geeignet ist, jede Nachricht mit einer Sendeleistung zu senden, die aus einer vordefinierten Vielzahl von Sendeleistungen ausgewählt wird,
- eine Stromversorgungsquelle,
- ein Modul zur Verwaltung der Stromversorgung, das unterbrechend zwischen dem Funkmodul und dem Versorgungsmodul geschaltet ist,
- ein Steuermodul, wobei das Steuermodul dazu geeignet ist, den Betriebsmodus des Messgeräts zwischen dem "am Boden" genannten ersten Betriebsmodus und dem "im Flug" genannten zweiten Betriebsmodus umzuschalten, wobei das Messgerät **dadurch gekennzeichnet ist, dass** das Modul zur Verwaltung der Stromversorgung ein Energiespeicherelement umfasst, das es ermöglicht, das Funkmodul zu versorgen; und
das Messgerät für Folgendes geeignet ist:
- im "am Boden" genannten ersten Betriebsmodus:
o vor dem Senden jeder Nachricht Laden des Energiespeicherelements mit einer vordefinierten Energie, die von der Stromversorgungsquelle bereitgestellt wird,
- im "im Flug" genannten zweiten Betriebsmodus:
o für jede zu sendende Nachricht Auswählen einer Sendeleistung des Funkmoduls,
o Ermitteln einer notwendigen Energie für das Senden der Nachricht durch das Funkmodul in Abhängigkeit von dieser Sendeleistung,
o vor dem Senden der Nachricht Laden des Energiespeicherelements mit der ermittelten notwendigen Energie, die von der Stromversorgungsquelle bereitgestellt wird.

2. Messgerät nach Anspruch 1, wobei das Messgerät **dadurch gekennzeichnet ist, dass** das Funkmodul außerdem Mittel zum Senden einer Nachricht in Abhängigkeit von einem Ausbreitungsfaktor umfasst, wobei der Ausbreitungsfaktor unter einer vordefinierten Vielzahl von Ausbreitungsfaktoren ausgewählt wird, wobei das Messgerät im "im Flug" genannten zweiten Betriebsmodus für Folgendes geeignet ist:
- für jede zu sendende Nachricht Auswählen einer Sendeleistung des Funkmoduls und eines Ausbreitungsfaktors,
- Ermitteln der notwendigen Energie für das Senden der Nachricht durch das Funkmodul in Abhängigkeit von der gewählten Sendeleistung und dem gewählten Ausbreitungsfaktor.

3. Messgerät nach Anspruch 2, **dadurch gekennzeichnet, dass** das Messgerät außerdem Mittel umfasst, um im "im Flug" genannten zweiten Betriebsmodus nach dem Senden einer Nachricht durch das Funkmodul mit einer ersten Sendeleistung und einem ersten Ausbreitungsfaktor und bei Fehlen einer Bestätigungsantwort des Funkzugangspunktes:
- Mittel zum Auswählen einer zweiten Sendeleistung des Funkmoduls und eines zweiten Ausbreitungsfaktors zum erneuten Senden der Nachricht,
wobei die zweite Sendeleistung und der zweite Ausbreitungsfaktor einem Eintrag in einer vorgegebenen Liste entsprechen, wobei die Liste die Vielzahl von Paaren umfasst, die durch die Vielzahl der Sendeleistungen und die Vielzahl der Ausbreitungsfaktoren gebildet werden, wobei jedes Paar mit einer Energie verknüpft ist, die zum Senden einer Nachricht mit der Sendeleistung des Paars und dem Ausbreitungsfaktor des Paars notwendig ist, wobei die Liste nach der zum Senden der Nachricht notwendigen Energie geordnet ist, die mit jedem Paar verknüpft ist, wobei die zweite Sendeleistung und der zweite Ausbreitungsfaktor dem Paar entsprechen, das dem Paar folgt, das durch die erste Sendeleistung und den ersten Ausbreitungsfaktor gebildet wird.

4. Messgerät nach Anspruch 3, **dadurch gekennzeichnet, dass** die Liste keine Paare umfasst, die durch eine Sendeleistung und einen Ausbreitungsfaktor gebildet werden, die eine höhere Energie zum Senden einer Nachricht oberhalb einer vorbestimmten Energieschwelle benötigen.

5. Messgerät nach Anspruch 3 oder 4, **dadurch gekennzeichnet, dass** das Messgerät eine Liste umfasst, die der jeweiligen Größe der zu sendenden Nachricht zugeordnet ist.

6. Messgerät nach einem der vorhergehenden Ansprüche, **dadurch gekennzeichnet, dass** das Modul zur Verwaltung der Stromversorgung einen Coulomb-Zähler umfasst.

7. System zur Überwachung eines Flugzeugs, wobei das System umfasst:
- eine Vielzahl von Messgeräten nach einem der vorhergehenden Ansprüche,
- einen Funkzugangspunkt, wobei der Funkzugangspunkt mit einer Ausrüstung des Flugzeugs verbunden ist.

## Claims

1. Measurement device (100) for a monitoring system intended to be installed in an aircraft, the measurement device being designed to operate according to a first operating mode, referred to as the "on the ground" operating mode, or a second operating mode, referred to as the "in flight" operating mode, the measurement device comprising:
- a sensor designed to measure at least one physical parameter of the environment of the aircraft,
- a radio module in accordance with a low-power wide-area network standard, the radio module being designed to transmit messages comprising measurement data originating from the sensor to a radio access point, the radio module being designed to transmit each message with a transmission power chosen from among a predefined plurality of transmission powers,
- an electrical power supply source,
- a module for managing the electrical power supply, connected in stream between the radio module and the electrical power supply module,
- a control module, the control module being designed to switch the operating mode of the measurement device between the first operating mode, referred to as the "on the ground" operating mode, and the second operating mode, referred to as the "in flight" operating mode,
the measurement device being **characterized in that** the module for managing the power supply comprises an energy storage element making it possible to supply power to the radio module; and
the measurement device is designed to:
- in the first operating mode, referred to as the "on the ground" operating mode:
o before transmitting each message, charge the energy storage element with a predefined amount of energy delivered by the electrical power supply source,
- in the second operating mode, referred to as the "in flight" operating mode:
o for each message to be transmitted, choose a transmission power of the radio module,
o determine, depending on this transmission power, an amount of energy necessary for transmitting the message by means of the radio module,
o before transmitting the message, charge the energy storage element with the determined necessary amount of energy delivered by the electrical power supply source.

2. Measurement device according to Claim 1, the measurement device being **characterized in that** the radio module further comprises means for transmitting a message depending on a spreading factor, the spreading factor being chosen from among a predefined plurality of spreading factors, the measurement device being designed to, in the second operating mode, referred to as the "in flight" operating mode:
- for each message to be transmitted, choose a transmission power of the radio module and a spreading factor,
- determine the amount of energy necessary for transmitting the message by means of the radio module depending on the chosen transmission power and spreading factor.

3. Measurement device according to Claim 2, **characterized in that** the measurement device further comprises means for, in the second operating mode, referred to as the "in flight" operating mode, subsequently to transmitting a message by means of the radio module with a first power and according to a first spreading factor, and in the absence of an acknowledgement response from the radio access point:
- means for choosing a second transmission power of the radio module and a second spreading factor, for retransmitting the message,
the second transmission power and the second spreading factor corresponding to an entry in a predetermined list, the list comprising the plurality of pairs which are formed by the plurality of transmission powers and the plurality of spreading factors, each pair being associated with an amount of energy necessary for transmitting a message with the transmission power of the pair and according to the spreading factor of the pair, the list being ordered according to the amount of energy necessary for transmitting the message associated with each pair, the second transmission power and the second spreading factor corresponding to the pair following the pair formed by the first transmission power and the first spreading factor.

4. Measurement device according to Claim 3, **characterized in that** the list does not comprise pairs formed by a transmission power and a spreading factor necessitating an amount of energy for transmitting a message above a predetermined energy threshold.

5. Measurement device according to Claim 3 or 4, **characterized in that** the measurement device comprises a list associated with each size of a message to be transmitted.

6. Measurement device according to one of the preceding claims, **characterized in that** the module for managing the electrical power supply comprises a Coulomb counter.

7. Monitoring system of an aircraft, the system comprising:
- a plurality of measurement devices according to one of the preceding claims,
- a radio access point, the radio access point being connected to an apparatus of the aircraft.
